# EUROPÄISCHE PATENTSCHRIFT

(11) **EP 0 454 945 B1**
(45) Veröffentlichungstag und Bekanntmachung des Hinweises auf die Patenterteilung: **30.03.1994**
(21) Anmeldenummer: 91100670.8
(22) Anmeldetag: 21.01.1991
(51) Int. Cl.: B62D 35/00

(54) **Kraftfahrzeug, insbesondere Personenwagen mit einer im Heckbereich angeordneten Luftleitvorrichtung**
Motor vehicle, especially passenger car, with an air guide device in the rear region
Véhicule automobile, notamment voiture particulière, avec un dispositif de guidage de l'air aménagé à la partie arrière

(30) Priorität: 04.05.1990 DE 4014380
(43) Veröffentlichungstag der Anmeldung: 06.11.1991
(73) Patentinhaber: Dr.Ing.h.c. F. Porsche Aktiengesellschaft, 70435 Stuttgart (DE)
(72) Erfinder: Eger, Georg, W-7141 Hochdorf/Vaihingen (DE); Weidemann, Reiner, W-7031 Ehningen (DE)

(56) Entgegenhaltungen:
- EP-A- 0 298 205
- DE-A- 3 615 584
- DE-A- 3 735 185

## Beschreibung

Die Erfindung betrifft ein Kraftfahrzeug, insbesondere einen Personenwagen mit einer im Heckbereich angeordneten Luftleitvorrichtung gemäß dem Oberbegriff des Patentanspruchs 1.

Bei einer bekannten, eine gute Funktion aufweisenden Luftleitvorrichtung der eingangs genannten Gattung (DE-U-36 15 584) ist am Fließheck eines Personenwagens eine durch eine ausstellbare Klappe gebildete Luftleitvorrichtung vorgesehen, die mittels einer Verstelleinrichtung von einer eingefahrenen Ruhestellung in eine ausgefahrene Betriebsstellung bewegbar ist. Die Klappe weist im Längsschnitt gesehen, einen konvexen Formverlauf auf. Damit bei ausgefahrener Klappe aufgrund des konvexen Formverlaufs der Klappe ein definiertes Abreißen des Luftstromes an der Luftleitvorrichtung erzielt wird, ist am hinteren Endbereich eine nach oben hin vorstehende Anformung an der Klappe vorgesehen. Dies hat zur Folge, daß bei eingefahrener Luftleitvorrichtung zwischen dem hinteren Randbereich der Klappe und der angrenzenden Außenfläche des Deckels örtlich ein stufenförmiger Übergang vorhanden ist.

Aufgabe der Erfindung ist es, an einer an einem Fließheck eines Personenwagens angeordneten, durch eine Klappe gebildeten Luftleitvorrichtung solche Vorkehrungen zu treffen, daß einerseits bei eingefahrener Luftleitvorrichtung ein stufenloser, glattflächiger Übergang zwischen der Klappe und den angrenzenden Aufbau erzielt wird und daß andererseits bei ausgefahrener Luftleitvorrichtung ein definiertes Abreißen des das Fließheck passierenden Luftstromes gewährleistet ist.

Erfindungsgemäß wird diese Aufgabe durch die kennzeichnenden Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die Ausbildung eines getrennt angeordneten Strömungsabreißelementes ein glatter stufenloser außenhautbündiger Übergang zwischen der Klappe und dem angrenzenden Aufbau bei eingefahrener Ruhestellung der Luftleitvorrichtung erreicht wird. Ferner wird bei ausgefahrener Luftleitvorrichtung ein definiertes Abreißen des über den Fließheckbereich hinweggeführten Luftstromes erzielt, was abtriebserhöhend wirkt. Mit dieser Luftleitvorrichtung läßt sich bei nahezu gleichbleibendem Luftwiderstand ein verringerter Auftrieb (= erhöhter Abtrieb) an der Hinterachse erzielen (Verhältnis: CW/CA).

Durch die Zwangssteuerung des Strömungsabreißelementes wird ein selbsttätiges Aus- bzw. Einfahren des Strömungsabreißelementes abhängig von der Bewegung der Klappe gewährleistet. In der eingefahrenen Ruhestellung der Luftleitvorrichtung ist das Strömungsabreißelement versenkt in einer Aufnahme des Deckels angeordnet und somit von außen nicht sichtbar. Die Luftleitvorrichtung, die Verstelleinrichtung und die Zwangssteuerung weisen einen einfachen Aufbau auf und benötigen wenig Bauraum.

Ein Ausführungsbeispiel der Erfindung ist in der Zeichnung dargestellt und wird im folgenden näher beschrieben.

Es zeigt:
- Fig. 1: eine Schrägansicht von hinten auf den Heckbereich eines Personenwagens mit einer Luftleitvorrichtung,
- Fig. 2: einen Schnitt nach der Linie II-II der Fig. 1 in größerem Maßstab, wobei lediglich die Luftleitvorrichtung und die Verstelleinrichtung dargestellt sind.
- Fig. 3: einen Schnitt entsprechend Fig. 2, wobei die Luftleitvorrichtung, das erfindungsgemäße Strömungsabreißelement und die Betätigungseinrichtung für das Strömungsabreißelement gezeigt sind,
- Fig. 4: einen Schnitt nach der Linie IV-IV der Fig. 2.
- Fig. 5: das Strömungsabreißelement und die Zwangssteuerung gemäß Fig. 3 in eingefahrener und ausgefahrener Stellung und in größerem Maßstab.

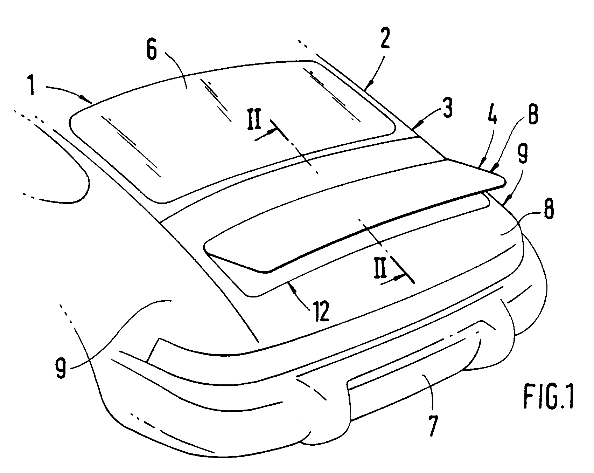

Der Personenwagen 1 umfaßt einen Aufbau 2 mit einer im Heckbereich 3 angeordneten Luftleitvorrichtung 4, die mittels einer Verstelleinrichtung 5 von einer bündig mit den angrenzenden Aufbau 2 verlaufenden Ruhestellung A in eine ausgefahrene Ruhestellung B bewegbar ist und umgekehrt. Durch die Luftleitvorrichtung 4 wird einerseits der Luftwiderstandsbeiwert des Personenwagens herabgesetzt und andererseits im Fahrbetrieb der dynamische Hinterraddruck vergrößert (Abtrieb). Im Heckbereich 3 setzt sich der Aufbau 2 aus einer Heckscheibe 6, einem Stoßfänger 7 und einer Heckhaube 8 zusammen, die zwischen Seitenteilen 9 angeordnet ist (Fig. 1). Die aus einem Außenteil 10 und einem Innenteil 11 zusammengesetzte Heckhaube 8 weist eine etwa rechteckförmige Öffnung 12 auf, in die die Luftleitvorrichtung 4 eingesetzt ist. Die Luftleitvorrichtung 4 wird durch eine schwenkbare Klappe 13 gebildet, die auf der der Heckscheibe 6 zugekehrten Seite unter Vermittlung von wenigstens einem Scharnier 14 drehbar am Innenteil 11 der Heckhaube 8 angelenkt ist. Das Innenteil 11 bildet eine tragförmige Aufnahme 15 für die Luftleitvorrichtung.

Ein Scharnierarm 16 des Scharniers 14 ist am Innenteil 11 der Heckhaube 8 angeschraubt, wogegen der andere Scharnierarm an der Klappe 13 befestigt ist. Der etwa horizontal ausgerichtete Scharnierbolzen 18 verläuft in Fahrzeugquerrichtung. Die Klappe 13 ist aus Blech oder aus Kunststoff gefertigt. Sie ist in eingefahrener Ruhestellung A außenhautbündig zum angrenzenden Aufbau 2 ausgerichtet. Zwischen der Klappe 13 und der Öffnung 12 verläuft umfangsseitig eine schmale Fuge 19.

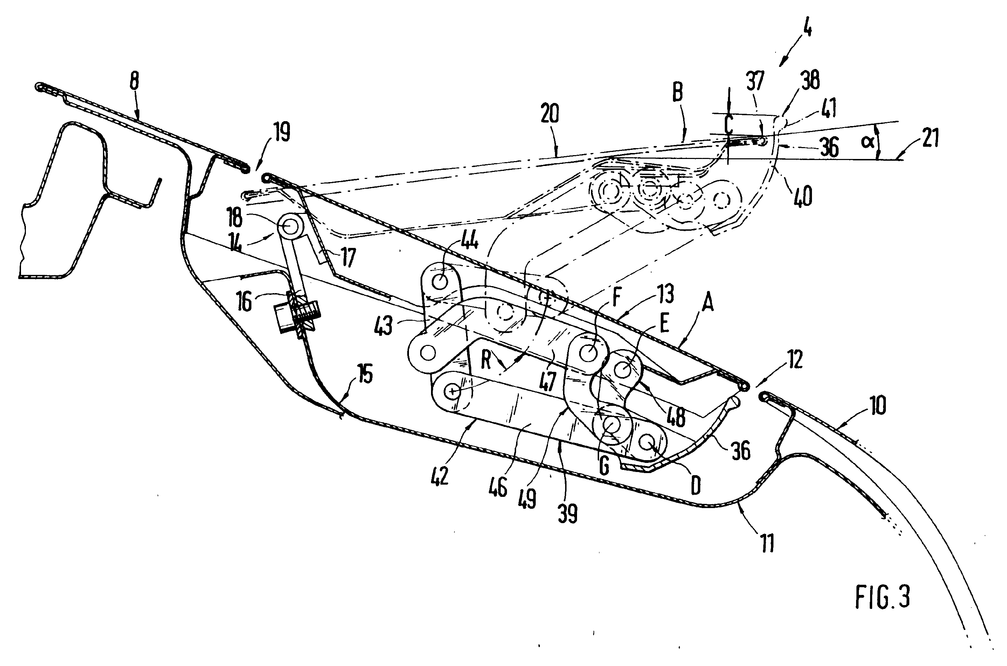

Im Längsschnitt gesehen weist die in das Fließheck eingesetzte Klappe 13 einen konvexen Formverlauf auf, d.h., eine äußere Anströmfläche 20 der Klappe 13 ist nach außen hin gewölbt. In der ausgefahrenen Betriebsstellung B ist die Klappe 13 aus der Karosserieebene herausgeschwenkt, dergestalt, daß ihre äußere Anströmfläche 20 gegenüber einer horizontalen Hilfsebene 21 um einen Winkel α nach oben hin angestellt ist. Die ausgefahrene Betriebsstellung B ist in Fig. 3 strichpunktiert dargestellt, wogegen die eingefahrene Ruhestellung A in durchgezogenen Linien gezeigt ist.

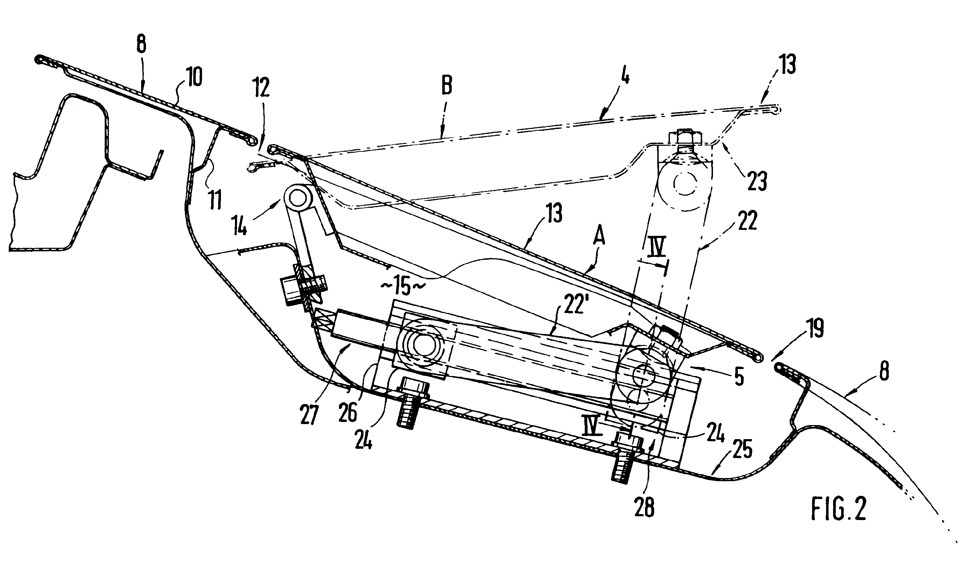

Die Verstelleinrichtung 5 für die Luftleitvorrichtung 4 umfaßt gemäß Fig. 2 einen Ausstellhebel 22, der einerseits mit einem hinteren Endbereich 23 der Klappe 13 und andererseits mit einem Führungselement 24 gelenkig verbunden ist. Das Führungselement 24 ist in einer längsgerichteten, an einem Boden 25 der Aufnahme 15 bzw. am Innenteil 11 der Heckhaube 8 befestigten Führungsschiene 26 verschiebbar gelagert und wird von einer Spindel 27 angetrieben.

Die Spindel 27 ist etwa mittig durch das Führungselement 24 hindurchgeführt und etwa parallel zur Führungsschiene 26 ausgerichtet. Durch eine Drehbewegung der Spindel 27 wird das Führungselement 24 in der Führungsschiene 26 verschoben. Bei ausgestellter Klappe (Betriebsstellung B) befindet sich das Führungselement 24 in einem hinteren Endbereich 28 der Führungsschiene 26 und der Ausstellhebel 22 ist aufrecht ausgerichtet (Fig. 2). An der Spindel 27 ist endseitig ein mehrflächiger Antriebszapfen angeordnet, der entweder direkt oder unter Vermittlung einer flexiblen Welle mit einem Getriebe und einem Elektromotor verbunden ist.

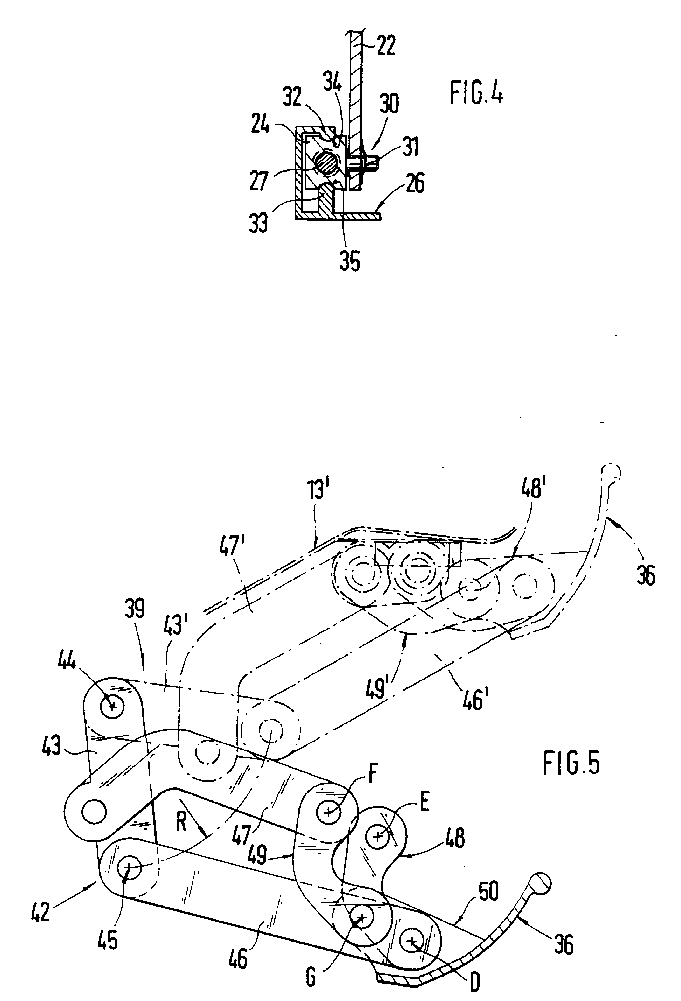

Bei eingefahrener Klappe 13 (Betriebsstellung A) ist das Führungselement 24 benachbart dem vorderen Endbereich 29 der Führungsschiene 26 angeordnet und der Ausstellhebel 22 verläuft annähernd parallel zur Führungsschiene (Lage 22'). Ein unterer Endbereich des Ausstellhebels 22 ist auf einem abgestellten Zapfenabschnitt 30 des Führungselementes 24 aufgesteckt und wird mittels eines Sicherungselementes 31 gegen axiales Verschieben gesichert (Fig. 4).

Die etwa C-förmig profilierte Führungsschiene 26 weist örtlich angeformte Stege 32, 33 mit endseitigen kreisbogenförmigen Abschnitten auf, die in korrespondierende Ausnehmungen 34, 35 des Führungselementes 24 eingreifen.

Die Luftleitvorrichtung 4 umfaßt ferner ein getrennt von der Klappe 13 ausgebildetes Strömungsabreißelement 36, das sich in Fahrzeugquerrichtung erstreckt und bei ausgefahrener Betriebsstellung B der Luftleitvorrichtung benachbart einem hinteren Rand 37 der Klappe 13 verläuft. Ein oberer Randbereich 38 des Strömungsabreißelementes 36 überragt die außenliegende Anströmfläche 20 der Klappe 13 in Höhenrichtung gesehen um ein Maß C. Das Maß C sollte mindestens 10 mm betragen, um eine gute Funktion der Luftleitvorrichtung 4 zu gewährleisten, d.h., um eine wirksame Abtriebserhöhung an der Hinterachse zu erzielen.

Das Strömungsabreißelement 36 ist über eine Zwangssteuerung 39 mit der Klappe 13 verbunden, d.h., beim Ausstellen der Klappe 13 bewegt sich das Strömungsabreißelement 36 selbsttätig in seine ausgefahrene Betriebsstellung B. In der eingefahrenen Ruhestellung A der Klappe ist das Strömungsabreißelement 36 versenkt in der Aufnahme 15 der Heckhaube 8 angeordnet. Das Strömungsabreißelement 36 wird durch ein querverlaufendes, in Strömungsrichtung gesehen konkaves Profil 40 gebildet, das nach Art eines Windabweisers ausgebildet ist. Bei ausgefahrener Klappe 13 ist ein oberer Endbereich des Profils 40 etwa vertikal ausgerichtet. Ferner weist das Profil 40 an seinem oberen Ende eine kreisförmige Querschnittserweiterung 41 auf. Durch das Strömungsabreißelement 36 wird bei ausgefahrener Luftleitvorrichtung 4 eine definierte Abreißkante für den das Fließheck passierenden Luftstrom gebildet, was abtriebserhöhend wirkt. Der Heckbereich 3 könnte auch als Stufenheck ausgebildet sein.

Bei eingefahrener Luftleitvorrichtung (Ruhestellung A) hingegen verläuft die gesamte Klappe 13 einschließlich des umfangsseitigen Randbereiches außenhautbündig zum angrenzenden Aufbau 2.

Die Zwangssteuerung 39 für das Strömungsabreißelement 36 wird durch ein Hebelgetriebe 42 gebildet. Das Hebelgetriebe 42 umfaßt einen ersten Lenker 43, der am Innenteil 11 der Heckhaube 8 bei 44 schwenkbar gelagert ist. Der erste Lenker 43 bewegt sich um einen Kreisbogen mit dem Radius R. Vom freien Ende 45 des ersten Lenkers 43 ist ein Ausstellhebel 46 weggeführt, der mit dem Strömungselement 36 drehbar verbunden ist (Drehpunkt D).

Ferner ist vom ersten Lenker 43 ein Kniehebel 47 weggeführt, der einerseits mit dem ersten Lenker 43 und andererseits mit der Klappe 13 drehbar verbunden ist (Drehpunkt F). Darüber hinaus besteht das Hebelgetriebe 42 aus zwei Führungshebel 48, 49, wobei der erste Führungshebel 48 mit dem einen Ende des Ausstellhebels 46 sowie dem Strömungsabreißelement 36 verbunden ist, wogegen das andere Ende des ersten Führungshebels 48 drehbar an der Klappe angelenkt ist (Drehpunkt E). Der zweite Führungshebel 49 ist einerseits mit der Klappe 13 (Drehpunkt F) und andererseits mit dem Strömungsabreißelement 36 drehbar verbunden (Drehpunkt G).

Das klappenseitige Ende des zweiten Führungshebels 49 ist ferner mit dem Kniehebels 47 verbunden. Die Drehpunkte der Führungshebel 48, 49 am Strömungsabreißelement 36 und an der Klappe 13 verlaufen in eingefahrener Ruhestellung der Klappe 13 parallelogrammartig (Drehpunkt D, E, F, G).

Die Drehpunkte D, G der Führungshebel 48, 49 am Strömungsabreißelement 36 sind an einer Anformung 50 des Strömungsabreißelementes 36 angeordnet.

In Fig. 5 ist die ausgestellte Betriebsstellung B des Strömungsabreißelementes 36 strichpunktiert dargestellt; der Lenker 43, der Ausstellhebel 46, der Kniehebel 47 und die Führungshebel 48, 49 nehmen dabei die Stellungen 43', 46', 47', 48' und 49' ein.

## Patentansprüche

1. Kraftfahrzeug, insbesondere Personenwagen mit einer im Heckbereich angeordneten Luftleitvorrichtung (4), die durch eine in die Fahrzeugkarosserie integrierte Klappe (13) gebildet wird, wobei die Klappe (13) mittels einer Verstelleinrichtung von einer etwa außenhautbündig verlaufenden Ruhestellung (A) in eine ausgefahrene Betriebsstellung (B) bewegbar ist und umgekehrt, **dadurch** **gekennzeichnet**, daß die Luftleitvorrichtung (4) ferner ein getrennt von der Klappe (13) ausgebildetes Strömungsabreißelement (36) umfaßt, das sich in Fahrzeugquerrichtung erstreckt und in Betriebsstellung B der Luftleitvorrichtung (4) benachbart einem hinteren Rand (37) der Klappe (13) verläuft, wobei ein oberer Randbereich (38) des Strömungsabreißelementes (36) eine außenliegende Anströmfläche (20) der Klappe (13) in Höhenrichtung gesehen um ein Maß (C) überragt.

2. Kraftfahrzeug nach Anspruch 1, dadurch gekennzeichnet, daß das Strömungsabreißelement (36) bei eingefahrener Ruhestellung A versenkt in einer Aufnahme (15) der Fahrzeugkarosserie angeordnet ist.

3. Kraftfahrzeug nach Anspruch 1, **dadurch gekennzeichnet**, daß das Strömungsabreißelement (36) über eine Zwangssteuerung (39) mit der Klappe (13) verbunden ist, dergestalt, daß beim Ausstellen der Klappe (13) das Strömungsabreißelement (36) selbsttätig in eine ausgefahrene Betriebsstellung bewegt wird.

4. Kraftfahrzeug nach Anspruch 3, **dadurch gekennzeichnet**, daß die Zwangssteuerung (39) durch ein Hebelgetriebe (42) gebildet wird.

5. Kraftfahrzeug nach Anspruch 1, **dadurch gekennzeichnet**, daß das Strömungsabreißelement (36) im Querschnitt gesehen durch ein aufrechtes konkaves Profil (40) gebildet wird, das an seinem oberen Ende eine kreisförmige Querschnittserweiterung (41) aufweist.

6. Kraftfahrzeug nach Anspruch 1, **dadurch gekennzeichnet**, daß die schwenkbare Klappe (13) und das Strömungsabreißelement (36) an einem Deckel bzw. an einer Heckhaube (8) des Aufbaus (2) angeordnet sind.

7. Kraftfahrzeug nach Anspruch 1, **dadurch gekennzeichnet**, daß die Klappe (13) mittels eines Scharniers (14) an einem Innenteil (11) des Deckels bzw. der Heckhaube (8) drehbar angelenkt ist.

8. Kraftfahrzeug nach Anspruch 1, **dadurch gekennzeichnet**, daß die Verstelleinrichtung (5) für die Klappe (13) einen Ausstellhebel (22) umfaßt, der einerseits mit einem hinteren Endbereich (23) der Klappe (13) und andererseits mit einem in einer Führungsschiene (26) verschiebbar gelagerten Führungselement (24) gelenkig verbunden ist, wobei das Führungselement (24) von einer Spindel (27) in der Führungsschiene (26) bewegt wird.

9. Kraftfahrzeug nach Anspruch 4, **dadurch gekennzeichnet**, daß das Hebelgetriebe (42) einen am Innenteil (11) der Heckhaube (8) drehbar gelagerten Lenker (43) umfaßt, der einerseits mit einem Ausstellhebel (46) und andererseits mit einem Kniehebel (47) zusammenwirkt, wobei der Kniehebel (47) mit der Klappe (13) und der Ausstellhebel (46) mit dem Strömungsabreißelement (36) verbunden ist und daß zwischen dem Strömungsabreißelement (36) und der Klappe (13) zwei etwa parallelogrammartig angeordnete Führungshebel (48, 49) vorgesehen sind.

## Claims

1. A motor vehicle, in particular a passenger car, with a spoiler device (4) arranged in a tail region and formed by a flap (13) integrated in the vehicle bodywork, wherein the flap (13) is movable by means of a displacement device into an extended operating position (B) from a rest position (A) extending substantially flush with the outer skin and *vice versa,* **characterized in that** the spoiler device (4) further comprises a flow-separation member (36) constructed separately from the flap (13) and extending in the transverse direction of the vehicle and extending adjacent to a rear edge (37) of the flap (13) in the operating position B of the spoiler device (4), wherein an upper edge area (38) of the flow-separation member (36) projects above an external surface (20) of the flap (13) subject to incident flow as viewed i the vertical direction by an amount (C).

2. A motor vehicle according to Claim 1, **characterized in that** in the retracted rest position A the flow-separation member (36) is a ranged lowered in a receiving portion (15) in the vehicle bodywork.

3. A motor vehicle according to Claim 1, **characterized in that** the flow-separation member (36) is connected to the flap (13) by way of a positive control (39) in such a way that when the flap (13) is pushed out the flow-separation member (36) is automatically moved into an extended operating position.

4. A motor vehicle according to Claim 3, **characterized in that** the positive control (39) is formed by a lever mechanism (42).

5. A motor vehicle according to Claim 1, **characterized in that** as viewed in cross-section the flow-separation member (36) is formed by a vertical concave profiled member (40) provided at the upper end thereof with a circular cross-sectional enlargement (41).

6. A motor vehicle according to Claim 1, **characterized in that** the pivotable flap (13) and the flow-separation member (36) are arranged on a top or on a tail cover (8) of the body (2).

7. A motor vehicle according to Claim 1, **characterized in that** the flap (13) is articulated on an inner part (11) of the top or of the tail cover (8) by means of a hinge (14).

8. A motor vehicle according to Claim 1, **characterized in that** the displacement device (5) for the flap (13) comprises a push-out lever (22) connected in an articulated manner at one end to a rear end area (23) of the flap (13) and at the other end to a guide member (24) displaceably mounted in a guide rail (26), wherein the guide member (24) is moved in the guide rail (26) by a spindle (27).

9. A motor vehicle according to Claim 4, **characterized in that** the lever mechanism (42) comprises a support arm (43) rotatably mounted on the inner part (11) of the tail cover (8) and cooperating on the one hand with a push-out lever (46) and on the other hand with a bell-crank lever (47), wherein the bell-crank lever (47) is connected to the flap (13) and the push-out lever (46) is connected to the flow-separation member (36), and two guide levers (48, 49) arranged substantially in the manner of a parallelogram are provided between the the flow-separation member (36) and the flap (13).

## Revendications

1. Véhicule automobile, en particulier voiture de tourisme comportant un dispositif de guidage d'air (4) monté dans la partie arrière, qui est formé par un volet (13) intégré à la carrosserie du véhicule, le volet (13) étant déplaçable au moyen d'un dispositif de réglage depuis une position de repos (A), à peu près alignée avec l'enveloppe extérieure, dans une position de fonctionnement (B) extraite et inversement, caractérisé en ce que le dispositif de guidage d'air (4) comporte en outre un élément de décollement d'écoulement (36) séparé du volet (13), qui s'étend dans la direction transversale au véhicule et qui en position de fonctionnement (B) du dispositif de guidage d'air (4) s'étend à proximité d'un bord arrière (37) du volet (13), une zone de bordure supérieure (38) de l'élément de décollement d'écoulement (36) dépassant d'une distance (C) une surface amont (20) située à l'extérieur du volet (13), vu dans le sens de la hauteur.

2. Véhicule automobile selon la revendication 1, caractérisé en ce que l'élément de décollement d'écoulement (36), en position de repos (A) rentrée, est encastré dans un logement (15) de la carrosserie du véhicule.

3. Véhicule automobile selon la revendication 1, caractérisé en ce que l'élément de décollement d'écoulement (36) est relié par une commande forcée (39) au volet (13) de manière que lorsque le volet (13) est orienté, l'élément de décollement d'écoulement (36) est automatiquement déplacé dans une position de fonctionnement ressorite.

4. Véhicule automobile selon la revendication 3, caractérisé en ce que la commande forcée (39) est formée par un mécanisme à leviers (42).

5. Véhicule automobile selon la revendication 1, caractérisé en ce que l'élément de décollement d'écoulement (36), vu en coupe transversale, est formé par un profil concave (40) vertical qui présente un élargissement de sa section transversale (41) circulaire, à son extrémité supérieure.

6. Véhicule automobile selon la revendication 1, caractérisé en ce que le volet (13) pivotant et l'élément de décollement d'écoulement (36) sont prévus sur un capot ou un capot arrière (8) de la carrosserie (2).

7. Véhicule automobile selon la revendication 1, caractérisé en ce que le volet (13) s'articule tournant au moyen d'une charnière (14) sur un élément intérieur (11) du capot ou du capot arrière (8).

8. Véhicule automobile selon la revendication 1, caractérisé en ce que le dispositif de réglage (5) du volet (13) comporte un levier d'orientation (22), qui est relié articulé d'une part avec une zone d'extrémité arrière (23) du volet (13) et d'autre part avec un élément de guidage (24), monté coulissant dans un rail de guidage (26), l'élément de guidage (24) étant déplacé par une broche (27) dans le rail de guidage (26).

9. Véhicule automobile selon la revendication 4, caractérisé en ce que le mécanisme à leviers(42) comporte un bras oscillant (43) monté tournant sur l'élément intérieur (11) du capot arrière (8), qui coopère d'une part avec un levier d'orientation (46) et d'autre part avec un levier coudé (47), le levier coudé (47) étant relié avec le volet (13) et le levier d'orientation (46) avec l'élément de décollement d'écoulement (36) et en ce que deux leviers de guidage (48, 49), disposés à peu près en parallélogramme, sont prévus entre l'élément de décollement d'écoulement (36) et le volet (13).
